# EUROPÄISCHE PATENTSCHRIFT

(11) **EP 1 556 269 B1**
(45) Veröffentlichungstag und Bekanntmachung des Hinweises auf die Patenterteilung: **11.06.2008**
(21) Anmeldenummer: 03766184.0
(22) Anmeldetag: 16.07.2003
(51) Int. Cl.: B62D 6/04

(54) **VERFAHREN ZUR BESTIMMUNG EINES BEI EINER BETÄTIGUNG EINES LENKRADES WIRKENDEN LENKMOMENTS BEI KRAFTFAHRZEUGEN**
METHOD FOR DETERMINING A STEERING TORQUE THAT IS ACTIVE DURING THE ACTUATION OF A STEERING WHEEL IN MOTOR VEHICLES
PROCEDE DE DETERMINATION D'UN COUPLE DE BRAQUAGE S'EXERCANT LORS DE L'ACTIONNEMENT D'UN VOLANT DE DIRECTION, DANS DES AUTOMOBILES

(30) Priorität: 31.07.2002 DE 10235039
(43) Veröffentlichungstag der Anmeldung: 27.07.2005
(73) Patentinhaber: Daimler AG, 70327 Stuttgart (DE)
(72) Erfinder: BERNZEN, Werner, 71139 Ehningen (DE); HUBER, Wilfried, 75395 Ostelsheim (DE); MAASS, Volker, 70563 Stuttgart (DE); MOSER, Martin, 70736 Fellbach (DE); SCHNECKENBURGER, Reinhold, 71277 Rutesheim (DE); URBAN, Christian, 70374 Stuttgart (DE)
(86) Internationale Anmeldenummer: PCT/EP2003/007696
(87) Internationale Veröffentlichungsnummer: WO 2004/012978

(56) Entgegenhaltungen:
- EP-A- 0 787 642
- US-A- 5 845 222
- US-A1- 2003 158 642
- US-B1- 6 349 789

## Beschreibung

Die Erfindung betrifft ein Verfahren zur Bestimmung eines bei einer Betätigung eines Lenkrades wirkenden Lenkmoments bei Kraftfahrzeugen.

Im Fahrbetrieb eines Fahrzeugs treten, insbesondere während einer Kurvenfahrt unterschiedlich hohe Kräfte an den gelenkten Rädern auf. Dies betrifft nicht nur die auf das Rad einwirkenden Seitenkräfte sondern auch die in der Radaufstandsfläche wirkenden Umfangskräfte zwischen Rad und Straße.

Unterschiedliche Umfangskräfte treten bei Bremsvorgängen und dann insbesondere bei Bremsvorgängen vorwiegend im Grenzbereich der Längskraftübertragung auf. Vor allem treten derartige unterschiedliche Umfangskräfte aber dann auf, wenn die gelenkten Räder angetrieben sind. Die Antriebskräfte werden auf die Räder übergeleitet, die Räder weisen aber unterschiedliche zu fahrende Kurvenradien und damit unterschiedliche Kombinationen an Seiten- und Längskräften auf, es bilden sich unterschiedlich hohe Kräfte am Rad. Sie werden über die Lenkung abgestützt, worauf sie über den konstruktiv gegebenen Störkrafthebelarm einwirken. Diese Kräfte kompensieren sich damit bei eingeschlagener Lenkung nicht mehr gegenseitig.

Diese Kräfte werden vor allem dann vom Fahrer als störend empfunden, wenn die über die Lenkung abgestützten Kräfte einen hohen Anteil am vom Fahrer aufzubringenden Lenkmoment haben. Dies ist beispielsweise beim Anfahren mit stark eingeschlagener Lenkung der Fall.

Das Auftreten dieses technischen Problems ist beispielsweise in der DE 35 41 732 A1 und der DE 37 30 936 A1, wobei sich letztere Anmeldung insbesondere auf Schienenfahrzeuge und nicht auf Straßenfahrzeuge bezieht, beschrieben, wobei dort mechanische Einrichtungen zur Kraftkompensation als Lösung der Aufgabe dargestellt sind.

**Die** US 5,845,222 **offenbart ein Verfahren bzw. eine Vorrichtung zum Bestimmen eines bei der Betätigung des Lenkrades wirkenden Lenkmoments bei Kraftfahrzeugen nach dem Oberbegriff des Verfahrensanspruchs 1 bzw. des Vorrichtungsanspruchs 15.**

**Ferner beschreibt die** US 5,828,972 **ein Lenksystem mit automatischer Störunterdrückung. Dort wird abhängig von Größen wie dem Lenkwinkel, der Lenkwinkelgeschwindigkeit, der Gierrate, der Querbeschleunigung und Lenkkräften ein Solllenkmoment ermittelt und eingestellt.**

**Aufgabe der Erfindung ist es**, das einer Betätigung des Lenkrades durch den Fahrer entgegenwirkende Lenkmoment so anzupassen, daß es frei von derartigen Störeinflüssen ist.

Diese Aufgabe wird durch ein Verfahren gemäß Patentanspruch 1 bzw. durch eine Vorrichtung gemäß Patentanspruch 15 gelöst.

Bei einem Kraftfahrzeug wird das bei einer Betätigung eines Lenkrades wirkende Lenkradmoment bestimmt. Bei dem Kraftfahrzeug handelt es sich dabei insbesondere um ein Kraftfahrzeug, dessen gelenkte Räder angetrieben sind. Hierbei wird gemäß einem erfindungsgemäßen Verfahren der auf Störeinflüsse beruhende Störmomentenanteil des Lenkradmomentes ermittelt. Mittels eines Momentenerzeugers wird dann am Lenkrad ein störkraftgemindertes Lenkmoment erzeugt. Gemäß bevorzugter Ausführungsform der Erfindung ist das störkraftgeminderte Lenkmoment störkrafteinflussfrei.

Dadurch, dass in dem Fahrzeug der Störmomentenanteil des Lenkradmomentes ermittelt wird, wird es ermöglicht, diesen Teil des Lenkradmomentes durch den Momentenerzeuger am Lenkrad weitgehend oder ganz zu kompensieren. Die Störkraft wird dabei entsprechend der Genauigkeit der Ermittlung der Störkrafteinflüsse sowie der Ansteuerung des Momentenerzeugers gemindert. Hierdurch verspürt der Fahrer den entstehenden Störmomenteneinfluß zumindest gemindert, vorzugsweise nicht mehr.

Gemäß einer bevorzugten Ausführung der Erfindung wird der Störmomentenanteil aus **weiteren** Radkräften ermittelt. Hierzu kann insbesondere wenigstens **eine der Kräfte aus Radnormalkraft und Radseitenkraft** verwendet werden, wobei diese Kräfte vorzugsweise für wenigstens einen Teil der gelenkten Räder ermittelt werden. Die Radkräfte können dabei unter Verwendung eines Modells, insbesondere eines Beobachters, ermittelt werden. Durch die Verwendung eines Modells, das insbesondere ein Achsmodell benutzt kann das Verhalten der Achse gut nachgebildet werden, so dass der Störkraftanteil gut ermittelt werden kann. Bei den Modellen kann es sich insbesondere um Beobachter, vorzugsweise modellgestützte Beobachter handeln.

Die Radkräfte werden insbesondere unter Verwendung mittels Sensoren gemessener oder im Fahrzeug ermittelter Größen bestimmt. Es werden dabei insbesondere Größen aus der Menge Lenkwinkel, Giergeschwindigkeit, Fahrzeuggeschwindigkeit, Querbeschleunigung, Raddrehzahlen, Radbremsdrücken und Antriebsmoment, verwendet. Diese Größen ermöglichen in vorteilhafter Weise die Ermittlung von Störmomentenanteilen, sie fließen insbesondere in das Modell bzw. den Beobachter ein. Darüber hinaus können Störmomente aus Radkräften und gemessenen Größen ermittelt werden, wobei hierzu insbesondere ein Beobachter oder wenigstens ein Kennfeld herangezogen wird.

Das an dem Lenkrad wirkende Lenkmoment wird vorzugsweise durch entsprechende Ansteuerung eines Momentenerzeugers um den ermittelten Störmomentenanteil gemindert. Es ist auch möglich ein störkrafteinflussfreies Soll-Lenkmoment zu ermitteln und dieses über den Momentenerzeuger einzusteuern oder einzuregeln, so dass hierdurch ein störkrafteinflussfreies Lenkmoment am Lenkrad erzeugt wird. Beide Varianten ermöglichen eine angenehme Bedienung des Lenkrades durch den Fahrer, das von Störmomentenanteilen frei ist. Das störmomenteneinflussfreie Soll-Lenkmoment kann hierzu mittels eines Modells, wie z.B. eines Beobachters, ermittelt werden, wobei dabei insbesondere Größen aus der Menge Lenkwinkel, Giergeschwindigkeit, Fahrzeuggeschwindigkeit, Querbeschleunigung, Raddrehzahlen, Radbremsdrücken und Antriebsmoment verwendet werden.

Abhängig von der Arbeitsweise des Momentenstellers wird zur Erzeugung des Lenkmomentes von dem Momentensteller einfach ein den Störmomentenanteil kompensierendes Moment erzeugt oder aber, falls das gesamte Lenkmoment durch den Momentenerzeuger erzeugt wird, einem ohne Betrachtung des Störmomentenanteils ermittelten Lenkmoments der Störmomentenanteil überlagert und das sich aus dieser Überlagerung ergebende Moment als Lenkmoment eingesteuert.

Es ist auch möglich, zur Ermittlung von Störmomenten aus Größen, wie den bereits vorgenannten Größen, eine spezifische Fahrsituation abzuleiten und die Störmomente in Abhängigkeit der erkannten Fahrsituation zu ermitteln.

Gemäß bevorzugter Ausführungsform der Erfindung wird das Lenkmoment geregelt. Dabei können insbesondere auch dann, wenn das Lenkmoment am Lenkrad geregelt wird, stochastische Schwingungsanregungen - insbesondere im Eigenfrequenzbereich der Lenkung - an gelenkten Rädern, sogenannter Shimmy, auch als Störmomente erfasst und ausgeregelt werden. Diese in bestimmten Fahrsituationen auftretenden Schwingungen werden dann nicht mehr an das Lenkrad weitergeleitet und somit der Komfort und die Fahrsicherheit für den Fahrer erhöht.

Die Erfindung sowie vorteilhafte Ausgestaltungen derselben sind außer in den Ansprüchen auch in der Beschreibung dargelegt. Darüber hinaus ist die Erfindung nachfolgend an Hand des in der Zeichnung dargelegten Ausführungsbeispiels näher erläutert; dabei zeigt
- Figur 1:: ein Blockdiagramm eines erfindungsgemäßen Verfahrens zur Bestimmung des einer Betätigung entgegenwirkenden Lenkradmomentes; und
- Figur 2:: ein Blockdiagramm eines erfindungsgemäßen Verfahrens zur Regelung des einer Betätigung entgegenwirkenden Lenkradmomentes.

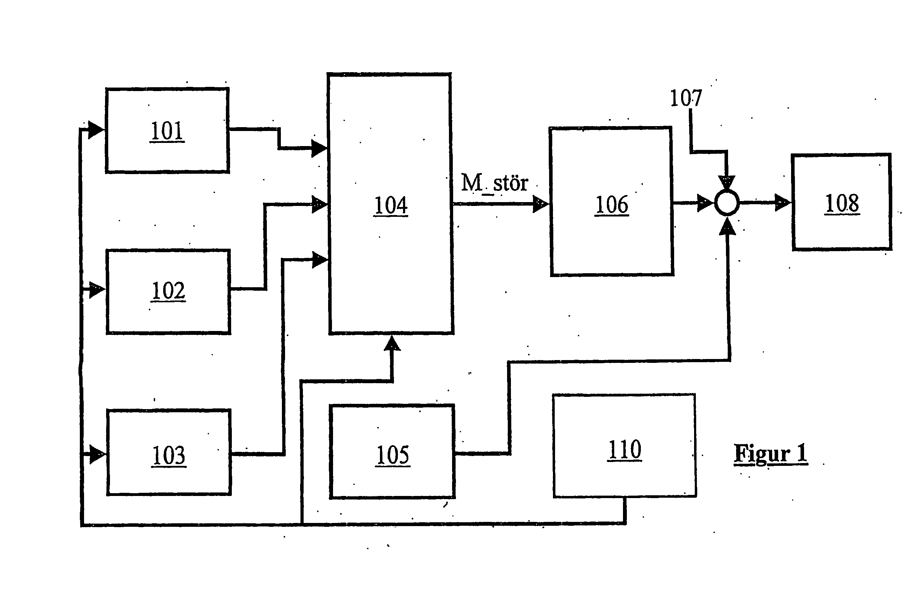

Gemäß dem in Figur 1 dargestellten Ausführungsbeispiel wird das Lenkmoment am Lenkrad geregelt. Zunächst werden der Regelung Eingangsgrößen 110 zugeführt. Diese Größen umfassen dabei insbesondere wenigstens einen Teil der Größen aus Lenkwinkel, Giergeschwindigkeit, Fahrzeuggeschwindigkeit, Querbeschleunigung, Radgeschwindigkeiten, Radbremsdrücken und Antriebsmoment. Diese Größen werden meist über Sensoren gemessen und liegen als Signale im Fahrzeug ohnehin vor. Die entsprechenden Werte werden dann nur zusätzlich auch dieser Regelung zugeführt, wobei die Auswahl der verwendeten Größen von den im Einzelfall verwendeten Modellen, Beobachtern und Kennfeldern abhängig ist.

Die zugeführten Eingangsgrößen werden drei unterschiedlichen Ermittlern 101, 102, 103 zugeführt, wobei im Ermittler 101 die Radumfangskräfte, im Ermittler 102 die Radnormalkräfte (Radaufstandskräfte) und im Ermittler 103 die Radseitenkräfte ermittelt werden. In jedem der Ermittler 101, 102, 103 kann die Ermittlung der entsprechenden Kräfte jeweils unter Verwendung eines entsprechenden Modells, wie eines vorzugsweise modellgestützten Beobachters, oder unter Verwendung angepasster Kennfelder vorgenommen werden.

Die Ergebnisse der Ermittler 101, 102 und 103 werden dann dem Bestimmer 104 zugeführt, in dem die Störmomentenanteile bestimmt werden. Der Bestimmer 104 ermittelt, wiederum unter Verwendung eines Modells, wie eines Beobachters, oder eines Kennfeldes aufgrund der Größen Lenkwinkel und der ermittelten Radkräfte sowie ggf. weiterer Eingangsgrößen 110, das Störmoment M_stör.

Dieses Störmoment M_stör wird dann der Auswerteeinheit 106 zugeführt. In der Auswerteeinheit wird aus dem Störmoment M_stör das für das Ansteuern des Momentenerzeugers 108 erforderliche Steuersignal erzeugt und anschließend gefiltert um es zu glätten. Das so erhaltene Signal wird dem Addierer 107 zugeführt. Dem Addierer 107 wird gemäß der dargestellten Ausführungsform zusätzlich auch ein Steuersignal, das aus einem Grundlenkmoment 105 abgeleitet wird, zugeführt, wobei das Grundlenkmoment ohne Berücksichtigung von Störmomenten ermittelt wird. Das Grundlenkmoment wird meist kennfeldabhängig ermittelt und dient der Steuerung des Lenkmoments beispielweise in Abhängigkeit der Fahrgeschwindigkeit. Diese beiden Stellsignale werden in dem Addierer 107 zusammengeführt und das sich daraus ergebende Stellsignal wird dem Momentenerzeuger 108 zugeführt, der dann das entsprechende Stellmoment erzeugt, das auf die in der Lenksäule übertragenen Momente aufgeschaltet wird, so dass diese Momente zum einen auf ein gewünschtes Soll-Maß reduziert werden und zum anderen die Störmomente herauskompensiert werden.

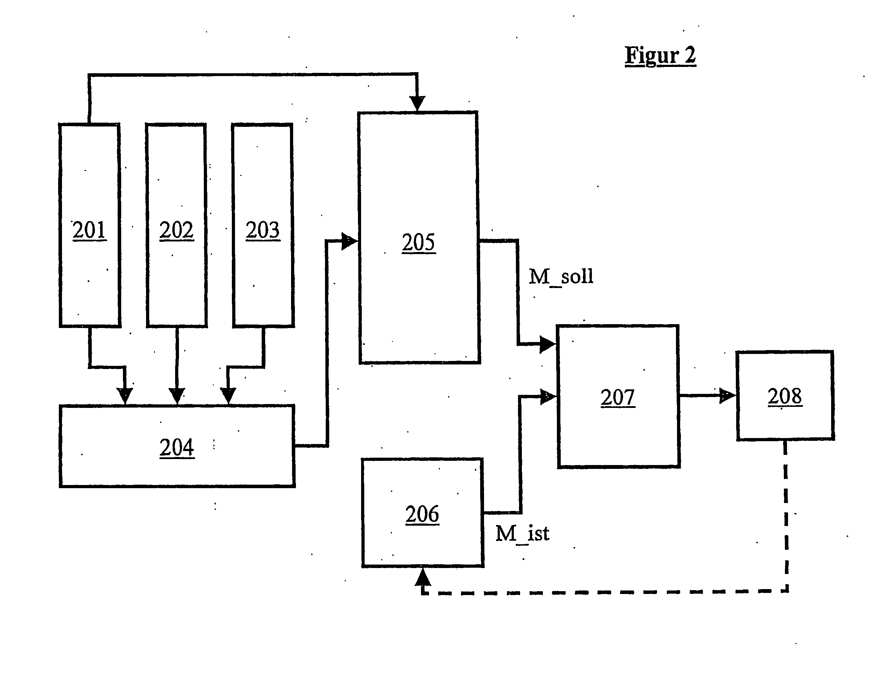

Die Figur 2 zeigt ein Ausführungsbeispiel, bei dem eine Regelung der Lenkmomente am Lenkrad erfolgt und damit auch eventuelle Störmomente kompensiert werden. Ein störmomentenfreies Verhalten des Lenkrades wird erzielt.

Dem Momentensteller 208 wird dazu von der Auswerteeinheit 207 ein Regelsignal zugeführt, das zur Erzeugung eines Lenkmoments führt. Das erzeugte Lenkmoment M_ist wird über den Momentensensor 206 erfasst und der Auswerteeinheit 207 zurückgeführt um die Regelstrecke zu schließen.

Ein Soll-Moment wird in der Beobachtereinheit 205 bestimmt und dann der Auswerteeinheit 207 zugeführt. Hierzu werden der Beobachtereinheit 205 Sensorsignale 201 zugeführt, die fahrdynamische Größen des Fahrzeugs, wie Lenkwinkel, Giergeschwindigkeit, Fahrzeuggeschwindigkeit und Querbeschleunigung repräsentieren. Darüber hinaus wird der Beobachtereinheit 205 auch das Signal eines Fahrsituationserkenners 204 zugeführt. Aus der in dem Fahrsituationserkenner 204 erkannten Fahrsituation und aus den Sensorsignalen 201 wird in der Beobachtereinheit 205 ein Lenkmoment M_soll ermittelt, das frei von Störeinflüssen ist. Dabei wird zur Ermittlung vorzugsweise ein Modell, insbesondere ein modellgestützter Beobachter, dem ein Fahrzeugmodell und insbesondere ein Modell der Lenkung zugrunde liegt, verwendet. Anstelle der Modellierung durch einen Beobachter, der die Fahrsituation berücksichtigt, können auch fahrsituationsabhängige Kennfelder vorgegeben werden.

Zur Ermittlung der Fahrsituation werden dem Fahrsituationserkenner den Fahrzustand des Fahrzeugs repräsentierende Sensorsignale 201 zugeführt. Zusätzlich hierzu werden auch das Radverhalten repräsentierende Sensorsignale 202 und zusätzlich oder alternativ auch noch Fahrbahninformationen 203 zugeführt. Die Fahrbahninformationen 203 können dabei insbesondere von einer optischen Straßenerfassungseinrichtung wie einer Kamera oder eine Navigationssystem stammen. Die das Radverhalten repräsentierenden Sensorsignale 202 beinhalten insbesondere Informationen über die Radgeschwindigkeiten (Raddrehzahlen) sowie die Radbremsdrücke. Diese Informationen insbesondere von den gelenkten Rädern werden dann bei der Ermittlung der Fahrsituation berücksichtigt.

Bei den ermittelten oder erkannten Fahrsituationen handelt es sich insbesondere um Kurvenfahrt, wobei hierbei insbesondere auch der Kurvenradius ermittelt wird, um Seitenwind, Situationen unterschiedlicher Kraftschlussbeiwerte an den Fahrzeugseiten (µ-split) und Situationen geringen nutzbaren Kraftschlussbeiwertes (µ-nutz).

Auf diese Art und Weise kann ein Soll-Lenkmoment M_soll ermittelt werden, das frei von Störeinflüssen ist. Insbesondere durch eine solche Regelung ist es möglich, auch stochastische Schwingungsanregungen, insbesondere solche im Bereich der Eigenfrequenz der Lenkung - sogenannter Shimmy - wenigstens teilweise zu kompensieren und das Lenkmoment am Lenkrad so zu regeln, dass solche Einflüsse weniger stark , vorzugsweise nicht spürbar sind. Das so ermittelte Lenkmoment dient der Verbesserung des Fahrkomforts und der Fahrsicherheit. Eine Beeinflussung durch Störmomente und eine Überreaktion oder Falschreaktion durch den Fahrer wird wesentlich verringert bzw. ganz vermieden.

## Patentansprüche

1. Verfahren zum Bestimmen eines bei einer Betätigung eines Lenkrades wirkenden Lenkmoments bei Kraftfahrzeugen, insbesondere bei an gelenkten Rädern angetriebenen Kraftfahrzeugen, wobei der auf Störeinflüssen beruhende Störmomentenanteil (M_stör) des Lenkmomentes (M_ist) ermittelt und mittels eines Momentenerzeugers (108,208) ein störkraftgemindertes Lenkmoment (M_ist) erzeugt wird
**dadurch gekennzeichnet,**
**dass** zur Ermittlung des Störmomentenanteils (M_stör) aus Größen eine spezifische Fahrsituation abgeleitet wird und die Störmomente (M_stör) in Abhängigkeit der abgeleiteten Fahrsituation ermittelt werden, wobei zur Ermittlung der Störmomente zumindest die Radumfangskräfte (101) verwendet werden.

2. Verfahren nach Anspruch 1,
**dadurch gekennzeichnet,**
**dass** das störkraftgeminderte Lenkmoment (M_ist) so bestimmt wird, dass es zumindest weitgehend störkraftfrei ist.

3. Verfahren nach Anspruch 1 oder 2,
**dadurch gekennzeichnet,**
**dass** der Störmomentenanteil (M_stör) aus Radkräften (101,102,103,201) ermittelt wird.

4. Verfahren nach Anspruch 3,
**dadurch gekennzeichnet,**
**dass** das Störmoment (M_stör) aus wenigstens einer der Kräfte aus Radnormalkräften (102) und Radseitenkräften (103) ermittelt wird.

5. Verfahren nach einem der Ansprüche 3 oder 4,
**dadurch gekennzeichnet,**
**dass** die Radkräfte (101,102,103,201) unter Verwendung eines Beobachters ermittelt werden.

6. Verfahren nach einem der Ansprüche 3 bis 5,
**dadurch gekennzeichnet,**
**dass** die Radkräfte (101,102,103,201) unter Verwendung mittels Sensoren gemessener oder im Fahrzeug ermittelter Größen, insbesondere von Größen aus der Menge Lenkwinkel, Giergeschwindigkeit, Fahrzeuggeschwindigkeit, Querbeschleunigung, Raddrehzahlen, Radbremsdrücken und Antriebsmoment, ermittelt werden.

7. Verfahren nach einem der vorhergehenden Ansprüche,
**dadurch gekennzeichnet,**
**dass** der Störmomentenanteil (M_stör) aus Radkräften (101,102,103,201) und gemessenen Größen ermittelt wird, wobei hierzu insbesondere ein Modell, vorzugsweise ein Beobachter, oder zumindest ein Kennfeld herangezogen wird.

8. Verfahren nach einem der Ansprüche 2 bis 7,
**dadurch gekennzeichnet,**
**dass** das an dem Lenkrad wirkende Lenkmoment (M_ist) um das Störmoment gemindert wird.

9. Verfahren nach einem der vorhergehenden Ansprüche,
**dadurch gekennzeichnet,**
**dass** aus Größen ein störkrafteinflussfreies Soll-Lenkmoment (M_soll) ermittelt wird.

10. Verfahren nach Anspruch 9,
**dadurch gekennzeichnet,**
**dass** das störkrafteinflußfreie Soll-Lenkmoment (M_soll) mittels eines Modells, insbesondere eines Beobachters, ermittelt wird, wobei insbesondere Größen aus der Menge Lenkwinkel, Giergeschwindigkeit, Fahrzeuggeschwindigkeit, Querbeschleunigung, Raddrehzahlen, Radbremsdrücken und Antriebsmoment verwendet werden.

11. Verfahren nach einem der Ansprüche 9 oder 10,
**dadurch gekennzeichnet,**
**dass** dem Momentenerzeuger (108,208) ein zu erzeugendes Lenkmoment sowie ein Störmomentenanteil (M_stör) zur Erzeugung des Lenkmoments zugeführt wird.

12. Verfahren nach einem der vorhergehenden Ansprüche,
**dadurch gekennzeichnet,**
**dass** ein Ist-Moment (M_ist) des Lenkmoments erfasst wird und aufgrund des Ist-Momentes (M_ist) und des ermittelten Störmomentenanteils (M_stör) ein störmomentenfreies Lenkmoment eingeregelt wird.

13. Verfahren nach einem der Ansprüche 1 bis 11,
**dadurch gekennzeichnet,**
**dass** ein Ist-Moment (M_ist) des Lenkmoments erfasst wird und aufgrund des Ist-Moments (M_ist) und des ermittelten störmomenteneinflussfreien Soll-Moments (M_soll) ein störmomentenfreies Lenkmoment (M_ist) eingeregelt wird.

14. Verfahren nach Anspruch 12 oder 13,
**dadurch gekennzeichnet,**
**dass** als Störmomentenanteile (M_stör) auch stochastische Schwingungsanregungen gelenkter Räder ermittelt werden.

15. Kraftfahrzeug mit einem Lenkrad zum Vorgeben eines Lenkwinkels durch einen Fahrer, einem Momentenerzeuger zum Beaufschlagen des Lenkrades mit einem Lenkmoment
**dadurch gekennzeichnet,**
**dass** das Lenkmoment nach einem der vorhergehenden Ansprüche ermittelt wird.

## Claims

1. Method for determining a steering torque acting when a steering wheel is activated in motor vehicles, in particular in motor vehicles which are driven on steered wheels, wherein the interference torque component (M_stor), based on interfering influences, of the steering torque (M_ist) is determined and the steering torque (M_ist) with reduced interference force is generated by means of a torque generator (108, 208), **characterized in that**, in order to determine the interference torque component (M_stör), a specific driving situation is derived from variables and the interference torques (M_stör) are determined as a function of the derived driving situation, at least the wheel circumferential forces (101) being used to determine the interference torques.

2. Method according to Claim 1, **characterized in that** the steering torque (M_ist) with reduced interference force is determined in such a way that it is at least largely free of interference force.

3. Method according to Claim 1 or 2, **characterized in that** the interference torque component (M_stor) is determined from wheel forces (101, 102, 103, 201).

4. Method according to Claim 3, **characterized in that** the interference torque (M_stör) is determined from at least one of the forces comprising wheel normal forces (102) and wheel lateral forces (103).

5. Method according to one of Claims 3 or 4,
**characterized in that** the wheel forces (101, 102, 103, 201) are determined using an observer.

6. Method according to one of Claims 3 to 5,
**characterized in that** the wheel forces (101, 102, 103, 201) are determined using variables which are measured by means of sensors or which are determined in the vehicle, in particular variables from the set comprising steering angle, yaw rate, vehicle speed, lateral acceleration, wheel speeds, wheel brake pressures and drive torque.

7. Method according to one of the preceding claims, **characterized in that** the interference torque component (M_stör) is determined from wheel forces (101, 102, 103, 201) and measured variables, wherein in particular a model, preferably an observer, or at least one characteristic diagram is used for this purpose.

8. Method according to one of Claims 2 to 7,
**characterized in that** steering torque (M_ist) which acts on the steering wheel is reduced by the interference torque.

9. Method according to one of the preceding claims, **characterized in that** a setpoint steering torque (M_soll) which is free of influence from an interference force is determined from variables.

10. Method according to Claim 9, **characterized in that** the setpoint steering torque (M_soll) which is free of influence from an interference force is determined by means of a model, in particular an observer, wherein in particular variables from the set of steering angle, yaw rate, vehicle speed, lateral acceleration, wheel speeds, wheel brake pressures and drive torque are used.

11. Method according to one of Claims 9 or 10,
**characterized in that** a steering torque which is to be generated and an interference torque component (M_stör) for generating the steering torque are fed to the torque generator (108, 208).

12. Method according to one of the preceding claims, **characterized in that** an actual torque (M_ist) of the steering torque is sensed and a steering torque which is free of interference torque is applied on the basis of the actual torque (M_ist) and the interference torque component (M_stör) which is determined.

13. Method according to one of Claims 1 to 11,
**characterized in that** an actual torque (M_ist) of the steering torque is sensed and a steering torque (M_ist) which is free of interference torque is applied on the basis of the actual torque (M_ist) and the setpoint torque (M_soll) which is free of influence from an interference torque.

14. Method according to Claim 12 or 13, **characterized in that** stochastic oscillation excitations of steered wheels are also determined as interference torque components (M_stör).

15. Motor vehicle having a steering wheel for the driver to predefine a steering angle, and a torque generator for applying a steering torque to the steering wheel, **characterized in that** the steering torque is determined according to one of the preceding claims.

## Revendications

1. Procédé pour déterminer un moment de direction agissant lors de l'actionnement d'un volant de direction sur les véhicules automobiles, notamment sur les véhicules automobiles propulsés par des roues orientables, la part de moment parasite (M_stör) du moment de direction (M_ist) qui se base sur les influences parasites étant déterminée et un moment de direction (M_ist) à force parasite réduite étant généré au moyen d'un générateur de moment (108, 208), **caractérisé en ce qu'**une situation de conduite spécifique est déduite de certaines grandeurs en vue de déterminer la part de moment parasite (M_stör) et les moments parasites (M_stör) sont déterminés en fonction de la situation de conduite déduite les forces sur la périphérie des roues (101) étant au moins utilisées pour déterminer les moments parasites.

2. Procédé selon la revendication 1, **caractérisé en ce que** le moment de direction (M_ist) à force parasite réduite est déterminé de telle sorte qu'il soit au moins pour l'essentiel exempt de force parasite.

3. Procédé selon la revendication 1 ou 2,
**caractérisé en ce que** la part de moment parasite (M_stör) est déterminée à partir des forces des roues (101, 102, 103, 201).

4. Procédé selon la revendication 3, **caractérisé en ce que** le moment parasite (M_stor) est déterminé à partir d'au moins l'une des forces parmi les forces normales aux roues (102) et les forces latérales aux roues (103).

5. Procédé selon l'une des revendications 3 ou 4, **caractérisé en ce que** les forces des roues (101, 102, 103, 201) sont déterminées en faisant appel à un observateur.

6. Procédé selon l'une des revendications 3 à 5, **caractérisé en ce que** les forces des roues (101, 102, 103, 201) sont déterminées en utilisant des grandeurs mesurées au moyen de capteurs ou déterminées dans le véhicule, notamment des grandeurs parmi le groupe suivant : angle de direction, vitesse de lacet, vitesse du véhicule, accélération transversale, vitesses de rotation des roues, pressions de freinage des roues et moment d'entraînement.

7. Procédé selon l'une des revendications précédentes, **caractérisé en ce que** la part de moment parasite (M_stör) est déterminée à partir des forces des roues (101, 102, 103, 201) et des grandeurs mesurées, un modèle, de préférence un observateur ou au moins un diagramme caractéristique étant notamment utilisé à cet effet.

8. Procédé selon l'une des revendications 2 à 7, **caractérisé en ce que** le moment de direction (M_ist) agissant sur le volant de direction est diminué du moment parasite.

9. Procédé selon l'une des revendications précédentes, **caractérisé en ce qu'**un moment de direction de consigne (M_soll) exempt de l'influence de forces parasites est déterminé à partir de grandeurs.

10. Procédé selon la revendication 9, **caractérisé en ce que** le moment de direction de consigne (M_soll) exempt de l'influence de forces parasites est déterminé au moyen d'un modèle, notamment d'un observateur, les grandeurs utilisées faisant notamment partie du groupe suivant: angle de direction, vitesse de lacet, vitesse du véhicule, accélération transversale, vitesses de rotation des roues, pressions de freinage des roues et moment d'entraînement.

11. Procédé selon l'une des revendications 9 ou 10, **caractérisé en ce qu'**un moment de direction à générer ainsi qu'une part de moment parasite (M_stör) sont acheminés au générateur de moment (108, 208) en vue de la génération du moment de direction.

12. Procédé selon l'une des revendications précédentes, **caractérisé en ce qu'**un moment réel (M_ist) du moment de direction est mesuré et qu'un moment de direction exempt de moment parasite est régulé en fonction du moment réel (M_ist) et de la part de moment parasite (M_stor) déterminée.

13. Procédé selon l'une des revendications 1 à 11, **caractérisé en ce qu'**un moment réel (M_ist) du moment de direction est mesuré et qu'un moment de direction exempt de moment parasite est régulé en fonction du moment réel (M_ist) et du moment de consigne (M_soll) exempt de l'influence des moments parasites déterminé.

14. Procédé selon la revendication 12 ou 13,
**caractérisé en ce que** les excitations oscillatoires stochastiques des roues orientables sont également déterminées en tant que parts de moment parasite (M_stör).

15. Véhicule automobile muni d'un volant de direction pour prédéfinir un angle de direction par un conducteur, d'un générateur de moment pour soumettre le volant de direction à un moment de direction, **caractérisé en ce que** le moment de direction est déterminé selon l'une des revendications précédentes.
